# EUROPEAN PATENT SPECIFICATION

(11) **EP 3 105 361 B1**
(45) Date of publication and mention of the grant of the patent: **28.10.2020**
(21) Application number: 15749157.2
(22) Date of filing: 11.02.2015
(51) Int. Cl.: C23C 4/10

(54) **METHOD FOR MANUFACTURING A BLADE WITH AN ABRASIVE TIP**
VERFAHREN ZUR HERSTELLUNG EINER SCHAUFEL MIT ABRASIVER SCHAUFELSPITZE
PROCÉDÉ DE FABRICATION D'UNE AUBE À POINTE ABRASIVE

(30) Priority: 14.02.2014 US 201461939904 P
(43) Date of publication of application: 21.12.2016
(73) Proprietor: United Technologies Corporation, Farmington, CT 06032 (US)
(72) Inventor: STROCK, Christopher W., Kennebunk, Maine 04043 (US); BEERS, Russell A., Manchester, Connecticut 06040 (US); HANSEN, James O., Glastonbury, Connecticut 06033 (US); GAROSSHEN, Thomas J., Glastonbury, Connecticut 06033 (US)
(74) Representative: Dehns
(86) International application number: PCT/US2015/015381
(87) International publication number: WO 2015/123274

(56) References cited:
- EP-A2- 0 246 596
- EP-A2- 2 540 961
- WO-A1-2014/083069
- US-A- 3 342 626
- US-A- 4 386 112
- US-A- 5 897 920
- US-A- 6 089 825
- US-A1- 2007 122 639
- US-A1- 2010 129 673
- US-A1- 2010 247 321
- US-B1- 6 434 876

## Description

### BACKGROUND

The disclosure relates to blades and rub coatings. More particularly, the disclosure relates to abrasive blade tips for cooperating with abradable coatings on turbomachines such as gas turbine engines.

Abradable coatings (rub coatings) protect moving parts from damage during rub interaction and wear to establish a mating surface to the moving parts with smallest possible clearance. The coatings are used in turbomachines to interface with the tips of a rotating blade stage, tips of cantilevered vanes and knife edge seals.

In an exemplary turbomachine such as a gas turbine engine, more particularly, a turbofan engine, coatings may be used to interface with the blade tips of fan blade stages, compressor blade stages, and turbine blade stages. Because temperature generally increases through the fan and compressor and is yet much higher in the turbine, different blade materials, surrounding case materials, and coating materials may be desired at different locations along the engine.

With relatively low temperatures in the fan and compressor sections, relatively low temperature materials may be used for their blades and the surrounding cases (at least through upstream (lower pressure) portions of the compressor). The exemplary blade materials in such lower temperature stages may be aluminum alloy, titanium alloy, carbon fiber or other composite, combinations thereof, and the like. Similarly, relatively lower temperature case materials may be provided. Particularly because the case material is not subject to the centrifugal loading that blades are, even lower temperature capability materials may be used (e.g., aramid or other fiber composites) in the case than in the blades.

US Patent Application Publication 20130156588 A1, published June 20, 2013, and entitled "Electrical grounding for fan blades", discloses blades having polyurethane-coated aluminum substrates.

It is known to use a coating along the inboard or inner diameter (ID) surface of the case component to interface with the blade tips. Such coatings serve to protect blade tips from damage during rub contact between the blades and case. When the blade tips are protected from damage during rub, clearance between the blades and case ID can be set closer and tighter operating clearance can be achieved.

To limit blade damage, the adjacent surfaces of the surrounding shroud may be formed by an abradable rub coating. Examples of abradable rub coatings are found in US Patents 3575427, 6334617, and 8020875. One exemplary baseline coating comprises a silicone matrix with glass micro-balloon filler. Without the glass filler, the elastic properties of the abradable coating result in vibrational resonances and non-uniform rub response. The glass increases the effective modulus of the coating so as to reduce deformation associated with aerodynamic forces and resonances. More recent proposals include filler such as polymer micro-balloons (PCT/US2013/023570) and carbon nanotubes (PCT/US2013/023566).

For interfacing with the abradable rub coating, the blade tips may bear an abrasive coating. US Patent Application Publication 2013/0004328 A1, published January 3, 2013, and entitled "ABRASIVE AIRFOIL TIP" discloses a number of such coatings.

WO 2014/083069 discloses a seal system for use in turbomachines. EP 2540961 discloses an airfoil comprising a substrate, a residual abrasive coating and a supplemental abrasive coating. US 4386112 discloses a method for applying abrasive coatings via plasma spraying. EP 0246596 discloses a wire for use in an arc gun. US 2010247321 discloses an article including a metallic substrate and a sacrificial layer disposed on the surface of the substrate and an anti-fouling layer disposed on the sacrificial layer.

### SUMMARY

One aspect of the disclosure involves a method for manufacturing a blade. The blade comprises: an airfoil having a root end and a tip; a metallic substrate along at least a portion of the airfoil; and a tip coating comprising an oxide abrasive and an aluminum-based matrix. The method comprises simultaneous thermal spray of the matrix and the abrasive, wherein the simultaneous thermal spraying comprises simultaneous plasma spraying, which comprises melting a wire, said wire being an oxide cored aluminum-based wire.

A further embodiment may additionally include the coating having a content of the oxide of at least twenty volume percent, more particularly twenty to fifty volume percent.

A further embodiment may additionally include the oxide comprising at least 50 weight percent of alumina or zirconia or a combination thereof.

A further embodiment may additionally include: the matrix being at least 75 weight percent aluminum; and the oxide filling the matrix to at least 20 volume percent.

A further embodiment may additionally include the tip coating having a characteristic thickness of 0.1mm to 0.3mm.

A further embodiment may additionally include the abrasive having a characteristic size of 3 micrometers to 25 micrometers.

A further aspect may additionally include, in use, causing the tip coating to abrade an adjacent coating.

A further embodiment may additionally include the simultaneous plasma spraying comprising a twin wire arc spraying.

A further embodiment may additionally include the tip being shadow masked during the spraying.

A further embodiment may additionally include applying a polymeric coating to a pressure side and a suction side of the airfoil.

A further aspect may additionally include the simultaneous thermal spraying comprising using one or more sources of metallic powder and, in-flight, oxidizing a portion of the portion of the powder to from the oxide.

A further aspect may additionally include the one or more sources comprising a first powder source being of powder having a first size distribution and a second powder source of powder having a second size distribution smaller than the first size distribution.

A further embodiment may additionally include the aluminum-based matrix comprising by weight 1.0-7.5 percent Zn or 2.0-5.0 percent Zn or 4.0-6.0 percent Zn.

A further embodiment may additionally include the aluminum-based matrix comprising by weight one to all of: 0.05-0.20 Si; and 0.010-0.40 percent combined one-to all of In, Sn, Cd, Ga, Hg.

A further embodiment may additionally include the matrix comprising, by weight, 0.010-0.030 percent In.

A further embodiment may additionally include the matrix comprising, by weight: balance Al; 4.75-5.75 percent Zn; 0.016-0.020 percent In; 0.20 max. each other element; and 0.50 max. total other elements.

In a further embodiment, the aluminum-based matrix is at least 275 millivolts more active than the metallic substrate.

A further embodiment may additionally include the metallic substrate being aluminum-based.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a partially schematic half-sectional view of a turbofan engine.
FIG. 2 is an enlarged transverse cutaway view of a fan blade tip region of the engine of FIG. 1 taken along line 2-2 and showing a first rub coating.
FIG. 2A is an enlarged view of a blade tip region of FIG. 2.
FIG. 3 is a view of a powder spray apparatus depositing an abrasive tip coating.
FIG. 4 is a view of a twin-wire spray apparatus depositing an abrasive tip coating.
FIG. 5 is a sectional view of the blade with a first mask.
FIG. 6 is a sectional view of the blade with a second mask.
FIG. 7 is a sectional view of the blade with a third mask.

Like reference numbers and designations in the various drawings indicate like elements.

### DETAILED DESCRIPTION

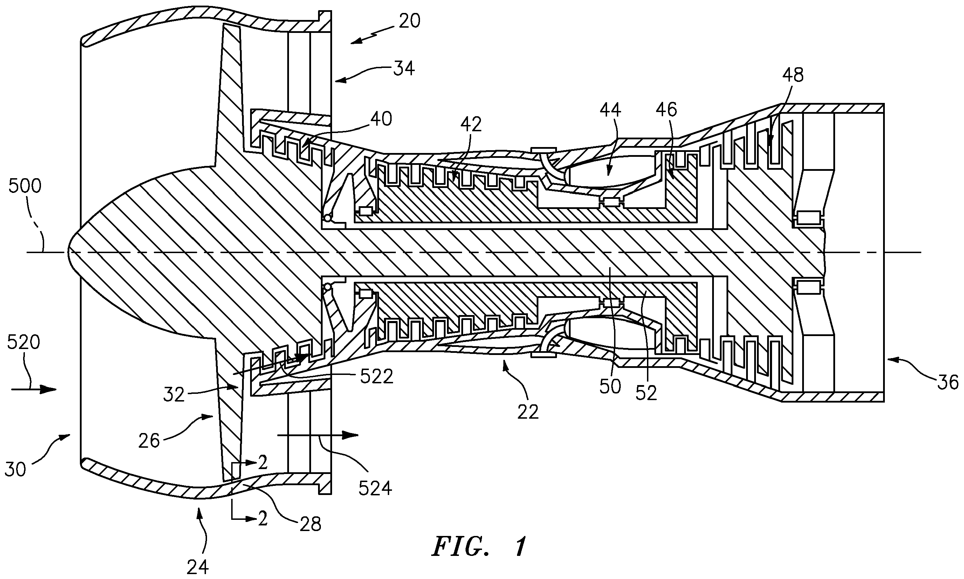

FIG. 1 shows a gas turbine engine 20 having an engine case 22 surrounding a centerline or central longitudinal axis 500. An exemplary gas turbine engine is a turbofan engine having a fan section 24 including a fan 26 within a fan case 28. The exemplary engine includes an inlet 30 at an upstream end of the fan case receiving an inlet flow along an inlet flowpath 520. The fan 26 has one or more stages 32 of fan blades. Downstream of the fan blades, the flowpath 520 splits into an inboard portion 522 being a core flowpath and passing through a core of the engine and an outboard portion 524 being a bypass flowpath exiting an outlet 34 of the fan case.

The core flowpath 522 proceeds downstream to an engine outlet 36 through one or more compressor sections, a combustor, and one or more turbine sections. The exemplary engine has two axial compressor sections and two axial turbine sections, although other configurations are equally applicable. From upstream to downstream there is a low pressure compressor section (LPC) 40, a high pressure compressor section (HPC) 42, a combustor section 44, a high pressure turbine section (HPT) 46, and a low pressure turbine section (LPT) 48. Each of the LPC, HPC, HPT, and LPT comprises one or more stages of blades which may be interspersed with one or more stages of stator vanes.

In the exemplary engine, the blade stages of the LPC and LPT are part of a low pressure spool mounted for rotation about the axis 500. The exemplary low pressure spool includes a shaft (low pressure shaft) 50 which couples the blade stages of the LPT to those of the LPC and allows the LPT to drive rotation of the LPC. In the exemplary engine, the shaft 50 also drives the fan. In the exemplary implementation, the fan is driven via a transmission (not shown, e.g., a fan gear drive system such as an epicyclic transmission) to allow the fan to rotate at a lower speed than the low pressure shaft.

The exemplary engine further includes a high pressure shaft 52 mounted for rotation about the axis 500 and coupling the blade stages of the HPT to those of the HPC to allow the HPT to drive rotation of the HPC. In the combustor 44, fuel is introduced to compressed air from the HPC and combusted to produce a high pressure gas which, in turn, is expanded in the turbine sections to extract energy and drive rotation of the respective turbine sections and their associated compressor sections (to provide the compressed air to the combustor) and fan.

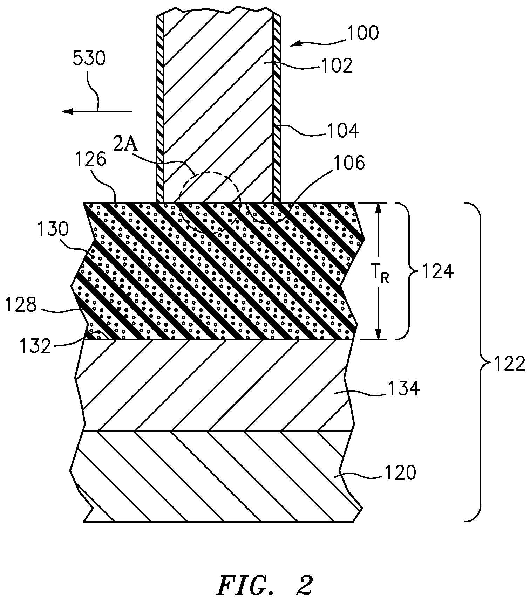

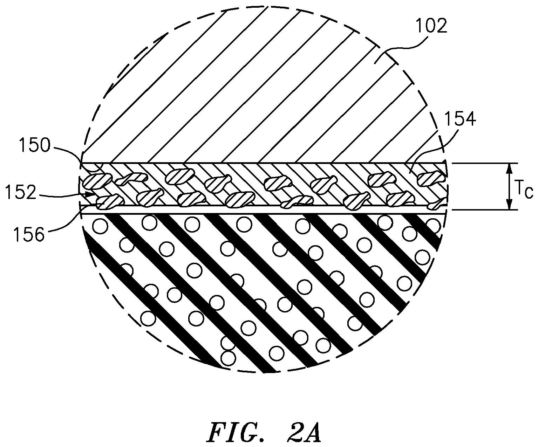

FIG. 2 shows a cutaway blade 100 showing a blade substrate (e.g., an aluminum alloy) 102 and a polymeric coating 104 (e.g., a polyurethane-based coating) on the substrate. The exemplary coating is along pressure and suction sides and spans the entire lateral surface of the blade between the leading edge and trailing edge. The exemplary coating, however, is not on the blade tip 106. If originally applied to the tip, the coating may have been essentially worn off during rub. Circumferential movement in a direction 530 is schematically shown.

FIG. 2 also shows an overall structure of the fan case facing the blade. This may include, in at least one example, a structural case 120. It may also include a multi-layer liner assembly 122. An inboard layer of the liner assembly may be formed by a rub material 124. The exemplary rub material 124 has an inboard/inner diameter (ID) surface 126 facing the blade tips and positioned to potentially rub with such tips during transient or other conditions.

The exemplary rub material 124 comprises a polymeric matrix material 128 and a filler 130 (e.g., polymeric particles or micro-balloons or glass micro-balloons). The exemplary rub material may be formed as a coating on an ID surface 132 of a substrate 134 of the liner assembly. An exemplary substrate 134 is titanium alloy AMS 4911. The rub material is shown as having an overall thickness T_{R}. Exemplary T_{R} is 1-10 mm, more particularly, 3-6 mm. Alternative abradable rub material may include metal matrix composites (e.g., formed by thermal spray coating).

FIG. 2A shows the tip region 106 with a tip surface 150 of the substrate bearing a coating 152. The coating 152 comprises matrix 154 and abrasive 156. The coating has a thickness T_{C}. Exemplary T_{C} is 2-35 mils (50micrometers to 0.9mm), more particularly, 4-12 mils (0.1mm to 0.3mm).

Exemplary matrix material is aluminum or aluminum alloy. One exemplary alloy is 88-12 Al-Si. Other matrix alloys for galvanic protection of the substrate are discussed below. Exemplary abrasive is alumina and/or zirconia or alumina-based and/or zirconia-based (e.g., at least 50% alumina and/or zirconia by weight or alumina or zirconia as a largest by-weight component). A particular abrasive is Metco 105NS from Sulzer Metco (US) Inc. Westbury, New York. A characteristic particle size and morphology is 15-45 mil (0.38mm to 1.1mm) 98wt% pure alumina particles produced by fusing and crushing.

An exemplary manufacture process involves forming the blade substrate by conventional means (e.g., forging and/or machining and peening). Portions of the blade may be masked. For example, some blade configurations have a titanium leading edge separated from an aluminum substrate by a slight gap

(e.g., epoxy-filled for galvanic isolation). The tip surface of the titanium leading edge member and the gap may be masked so that the abrasive coating does not electrically bridge the aluminum substrate and titanium leading edge.

Exemplary masking methods may include silicone thermal spray masking tape in combination with a sheet of rubber to cover the majority of the part. Masking may additionally or alternatively include shadow masking where the shadow mask is spaced apart from the tip. In shadow masking, the gun may be traversed relative to the part. During a portion of the traversal, the mask partially occludes a portion of the deposition area leading to a relatively thick coating in the center of the area, thinning toward the periphery.

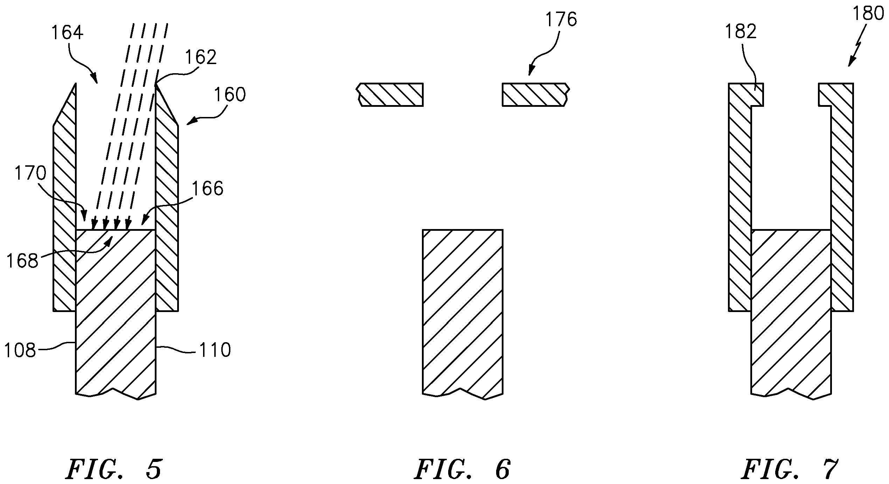

FIG. 5 is a sectional view showing a mask 160 protruding from the tip along pressure side surface 108 and suction side surface 110 of the blade and extending to a rim 162 defining the window or aperture 164. As the spray gun traverses off center, a shadow is initially cast along a peripheral portion 166, while the center 168 and opposite peripheral portion 170 receive coating. The shadow eventually may cover the central portion then the opposite peripheral portion. The spray may approach the window from off center via an opposite process from that side or the other.

FIG. 6 shows a remote non-contact mask 176 where both the window and remainder of the mask are spaced apart from the part (e.g., the mask is a flat plate). The window planform may be slightly greater, the same as, or slightly smaller than the planform area to be coated and may have similar shape thereto. The exemplary externally beveled sharp edge of the mask helps deflect overspray and reduces outward buildup to facilitate reuse.

As an example of a small window, FIG. 7 shows a contact mask 180 having a narrowed window open to a central portion of the region to be coated but with a portion 182 of the mask surround the window directly in front of a perimeter portion of that region so as to more significantly feather the coating along that perimeter portion.

For blades having polymer coatings on the airfoil pressure and suction side surfaces, such coating could also be used to mask if the polymer coating was applied before rather than after applying the abrasive coating.

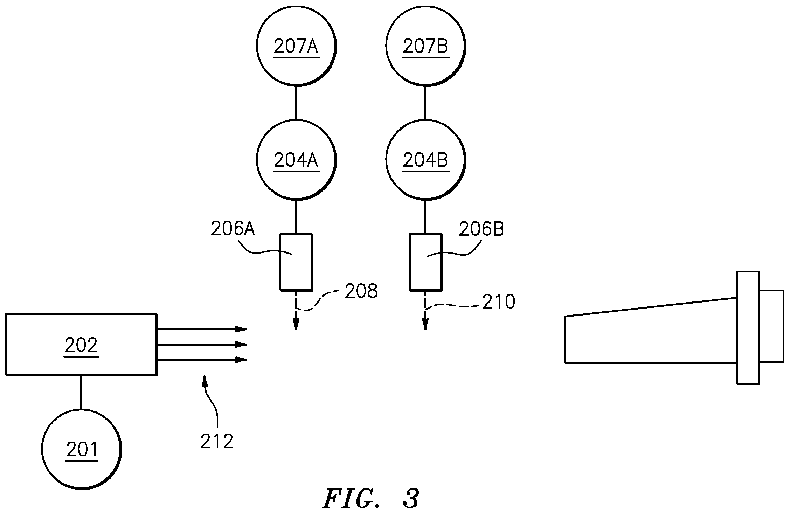

Thereafter the abrasive coating is then applied by codeposition. An exemplary codeposition involves simultaneous air plasma spray of aluminum powder (for the matrix) and alumina (for the abrasive). Exemplary codepostion not forming part of the invention involves a system 200 (FIG. 3) with a single plasma gun 202 (having a plasma gas source 201) and separate powder sources 204A, 204B (e.g., powder feeders with separate injection nozzles 206A, 206B coupled to carrier gas sources 207A, 207B) for introducing streams of matrix 208 and abrasive material 210 to the plasma 212. During the spray process, the aluminum and aluminum oxide particles are at least partially melted.

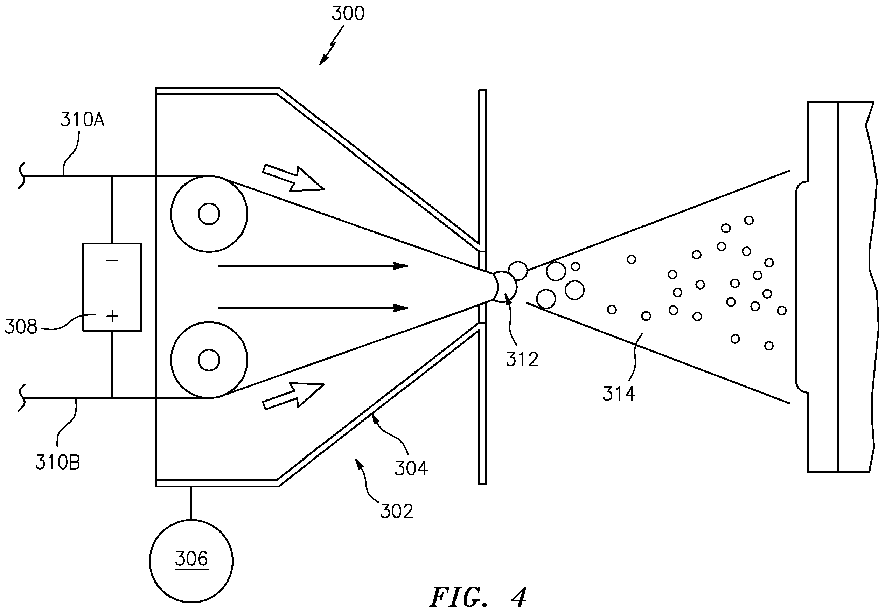

A codeposition process according to the invention is for example a twin wire arc spray processes wherein alumina-cored aluminum wire is heated and melted by an electric arc and propelled as droplets (e.g., distinct droplets of alumina and aluminum) toward a surface by a gas stream. FIG. 4 shows an exemplary twin wire system 300 wherein the gun 302 has a nozzle 304 and an atomizing gas supply 306. A power supply 308 applies a voltage between wires 310A and 310B which converge to form an arc 312 and discharge a droplet spray 314 toward the substrate. The exemplary wires are both alumina-cored aluminum. An exemplary volume fraction of alumina in the wires is at least 10%, more particularly, 20-50% or 30-50%. This leads to a similar volume percentage of the as-deposited material. The powder sources of the system 200 may dispense powder in a similar ratio to yield a similar ratio in the coating.

Another alternative deposition process is a twin wire arc spray processes wherein an aluminum (e.g., pure aluminum) wire is heated and melted by an electric arc and propelled as droplets toward a surface by a gas stream. Through interaction with atmospheric oxygen or oxygen as a component of the atomizing gas stream, a portion of the aluminum is oxidized to form aluminum oxide during the spray process. Air may be used as the gas stream to provide the atomization, propulsion, and oxygen. In flight from the nozzle, a surface layer of each droplet will oxidize. The surface layer may have a thickness up to the full particle radius. The oxide surface layer may be molten, partially molten, or solid. Additionally, a fraction of the aluminum droplets may fully or partially solidify during flight. Upon impact with a surface, the droplets flatten and are quench cooled by thermal conduction to the already-deposited coating or substrate. During this process, liquid aluminum and liquid aluminum oxide form irregularly shaped laminar or globular features in the coating. Solid or semi-solid (partially molten) particles show less deformation upon impact, may fracture, or deposit as spherical particles. Particle deposition in thermal spray is a highly stochastic process. This leads to the formation of a variety of oxide geometries in the coating ranging from thin stringers to round particles, clusters of oxides, and angular fractured particles. As-deposited volume proportions of oxide and metal may be as discussed above.

Another alternative deposition process not forming part of the invention is air plasma spray wherein pure aluminum powder is heated and melted by a plasma stream and propelled as droplets toward a surface during which the powder at least partially oxidizes to form the abrasive phase of the coating. Exemplary feed stock powder is Metco 54NS from Sulzer Metco (US) Inc. of Westbury, New York. Oxidation occurs by interaction with atmospheric oxygen or oxygen as a component of the powder carrier gas stream. The alumina content of the coating can be manipulated by adjusting feed stock particle size. One or more exemplary ranges of particle size may be selected within a broader range such as 11 micrometers to 150 micrometers. Finer particles have higher relative surface area and reach higher temperature during spray. These will both result in higher alumina fraction in the coating. Additionally, the amount of available oxygen, plasma power and other spray parameters may be adjusted for the purpose of targeting a desired alumina fraction. When using powder feed stock, as opposed to the wire in wire arc spray, a higher level of microstructural control may be achieved. For example, particle size distribution can be tailored to achieve the desired abrasive to matrix ratio in the coating. An example of particle size distribution is a bimodal size distribution. The fine and coarse size fractions are injected to the plasma stream through separate feed systems and powder ports in order to optimize particle heating and trajectory. With separate feed systems, the ratio of fine to coarse powder may be adjusted to target the desired coating properties. The fine powder will form a disproportionate fraction of the oxide while the coarse powder forms a disproportionate fraction of the metal matrix.

An example of a process uses a Sulzer Metco 3MB spray torch with #708 nozzle operating at 30kW with pure nitrogen plasma gas flowing at 80 SCFH. Powder feed is 25 g/minute of 10 - 25 micron particle size through a smaller (e.g., #2) powder port and 45g/minute of 45 to 100 micron particle size through a larger (e.g., #4) powder port. Both powders are fed using 10 SCFH of air as carrier gas. This oxygen containing carrier gas contributes to the available oxygen in the spray plume for converting aluminum to aluminum oxide.

Further adjustment of oxide content can be achieved by varying the amount of oxygen entrained in the spray plume by using additional gas injector ports such as a #2 powder port (without powder) or adjusting the oxygen fraction in the carrier gas. The additional gas injection and the carrier gas oxygen content may be adjusted from pure nitrogen or other non-oxygen containing gas to pure oxygen. Additionally, water may be injected as liquid or vapor as an oxygen source in the various embodiments.

Relative to uncoated tips or alternative coatings the exemplary coating may have one or more of several advantages. The aluminum based (e.g., pure aluminum) matrix on aluminum substrate combination may have good electrochemical compatibility from an aqueous corrosion perspective.

The aluminum-based matrix is relatively low modulus so that it causes less of a fatigue debit (as opposed to a high modulus coating which at a coating defect or edge will cause a relatively higher stress concentration in the substrate and therefore create a more likely initiation site for cracking), is soft and has a low melting point so that it wears away at relatively lower surface temperature during rub (e.g., rub with a glass filled abradable case liner or blade outer air seal coating).

Melting point limits the maximum temperature that can be caused by frictional heating. Low melting point of aluminum (compared with prior art nickel matrix), means that there is significant softening as the contact surface heats up, thereby reducing forces and heat generation compared with the nickel. In wearing away, it further reduces rub temperature by exposing hard alumina abrasive phase. Aluminum properties of the substrate are very temperature sensitive. The spray process using aluminum matrix can keep the part temperature low (e.g., potentially as low as 200°F (93°C)) and not harm the base metal properties.

In general, exemplary particle size is 0.5 micrometer to 50 micrometers. More particularly, a characteristic size (mean, median, or modal from the volume point of view) is 3 micrometers to 25 micrometers or 3 micrometers to 10 micrometers. Exemplary size is measured in as the least dimension (e.g., the minor axis of an ellipsoid).

As an alternative to pure aluminum matrix material, aluminum alloys may be used as noted above. One possible use of aluminum alloy matrix is to use the matrix as a sacrificial anode relative to substrate material. Candidate matrix materials may be based on compositions used for galvanic protection of aluminum-hulled ships. Such protection as a blade coating has been proposed in PCT/US14/17701, published September 25, 2014 as WO2014/149365 A1.

Table I below shows exemplary compositions:

**Table I**

| Matrix Alloys for Substrate Galvanic Protection (Weight %) | | | | | | | | | |
|---|---|---|---|---|---|---|---|---|---|
| Element | Alloy | | | | | | | | |
| | Galvotec CW III* | Ex. 1 | Ex. 2 | Ex.3 | Ex.4 | Ex. 5 | Ex 6 | Ex 7 | Ex 8 |
| Zn | 4.75-5.75 | 1.0 to 7.5 | 1.0 to 7.5 | 1.0 to 7.5 | 1.0 to 7.5 | 1.0 to 7.5 | 1.0 to 7.5 | 2.0 to 7.0 | 2.0 to 5.0 |
| In, Sn, Cd, Ga, Hg | 0.016-0.020 In | 0.010 to 0.20 In | 0.050 to 0.30 Sn | 0.020 to 0.050 Cd | 0.01 to 0.10 Ga | 0.01 to 0.10 hg | 0.01 to 0.40 combined | 0.01 to 0.4 combined | 0.01 to 0.30 combined |
| Si | 0.080-0.12 | 0.20 max | 0.20 max | 0.20 max | 0.20 max | 0.20 max | 0.20 max | 0.20 max | 0.20 max |
| Cu | 0.003 max. | 0.10 max | 0.10 max | 0.10 max | 0.10 max | 0.10 max | 0.10 max | 0.10 max | 0.10 max |
| Fe | 0.060 max. | 0.10 max | 0.10 max | 0.10 max | 0.10 max | 0.10 max | 0.10 max | 0.10 max | 0.10 max |
| Al | Bal. | Bal. | Bal. | Bal. | Bal. | Bal. | Bal. | Bal. | Bal. |

| | | | | | | | | | |
|---|---|---|---|---|---|---|---|---|---|
| * Trademark of Galvotec Alloys, Inc., Harvey, Louisiana. | | | | | | | | | |

For each of the ranges with 0.20 max Si, 0.10 max Cu, and 0.10 max Fe, one to all of these ranges may be narrowed to respective values of 0.15 max Si, 0.010 max Cu, and 0.060 max Fe. An alternative Zn content for Ex. 7 or 8 would be 4.0 to 6.0 weight percent.

The Zn provides the principal effect on galvanic potential relative to Al. Thus, exemplary alloys may comprise the Al and Zn. Zn content may be selected to keep the matrix anodic to the substrate, thus, higher Zn in the substrate will likely be associated with higher Zn in the matrix.

The In, Sn, Cd, Ga, and/or Hg tend to hinder the protective self-oxidation of the basic Al-Zn mixture to assist in ability to sacrifice.

Si, if present, may help control microstructure. Thus, variations on the examples above where only a max Si is specified could include a min Si of 0.050 weigh percent.

Other elements beyond the Al and Zr may be present in standard impurity levels or at non-impurity levels that do not substantially compromise galvanic protection (e.g., that do not reduce the difference in potential relative to the substrate by more than 50% compared with the basic potential associated with the Al-Zr combination in the ratio present in that matrix). Exemplary other elements would be expected to aggregate not more than 5.0 weight percent or 3.0 weight percent or 1.0 weight percent and would typically be present individually at not more than 1.5 weight percent or 1.0 weight percent.

Exemplary substrate alloys include 2000-series and 7000-series high stress aluminum alloys. Exemplary alloys are at least 80.0 weight percent Al, more particularly at least 85.0, with an exemplary 85.0-96.0.Table II below shows exemplary compositions:

**Table II**

| Substrate Alloys Subject to Galvanic Protection (Weight %) | | | | | |
|---|---|---|---|---|---|
| Element | Alloy | | | | |
| | AA7255 | AA2060 | AA2099 | Range 1 | Range 2 |
| Al | Remainder | Remainder | Remainder | Remainder | Remainder |
| Cr | <= 0.04 | | <= 0.05 | <= 0.05 | <= 0.3 |
| Cu | 2.0 - 2.6 | 3.4 - 4.5 | 2.4 - 3.0 | 2.0 - 4.5 | 1.0 - 4.5 |
| Fe | <= 0.09 | <= 0.07 | <= 0.07 | <= 0.09 | <= 0.15 |
| Li | | 0.60 - 0.90 | - 2.0 | <= 2.0 | <= 3.0 |
| Mg | 1.8 - 2.3 | 0.60 - 1.1 | 0.1 - 0.5 | 0.1 - 2.3 | 0.05 - 3.0 |
| Mn | 0.05 | 0.10 - 0.50 | 0.1 - 0.5 | 0.10 - 0.50 | <= 0.6 |
| Other, (each) | <= 0.05 | <= 0.05 | <= 0.05 | <= 0.05 | <= 0.05 |
| Other, (total) | <= 0.15 | <= 0.15 | <= 0.15 | <= 0.15 | <= 0.15 |
| Si | <= 0.06 | <= 0.07 | <= 0.05 | <= 0.07 | <= 0.4 |
| Ag | | 0.05 - 0.50 | | <= 0.50 | <= 1.0 |
| Ti | <= 0.06 | <= 0.10 | <= 0.10 | <= 0.10 | <= 0.25 |
| Zn | 7.6 - 8.4 | 0.30 - 0.50 | 0.40 - 1.0 | 0.3 - 8.4 | 0.1 - 10.0 |
| Zr | 0.08 - 0.15 | 0.05 - 0.15 | 0.05 - 0.12 | 0.05 - 0.15 | <= 0.25 |

Additional substrate candidates include developmental alloys containing additional components such as Sc, Co, and Y.

For application techniques, similar techniques to those mentioned above may be used as may similar abrasives. Additional abrasives may also be used including but not limited to carbides (e.g., titanium carbide), borides (e.g., titanium boride) nitrides (e.g., titanium nitride), diamond like carbon, quartz, and the like. Other spray techniques may also be utilized.

The as-deposited matrix, may have the same composition as the source matrix material (e.g., of Table I) at least away from very slight diffusion zones around the abrasive particles (e.g., carbides and borides as abrasives will have relatively low reactivity or diffusion with the matrix).

To provide desirable protection, exemplary matrix alloys are sufficiently more anodic than the substrates they protect. One measurement is standard electrode potential by which the matrix alloys may be at least 300 millivolt more active than the substrate alloys they protect, more broadly at least 275 millivolts. An exemplary range is 100 millivolts to 400 millivolts, more narrowly 275 millivolts to 325 millivolts.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

Where a measure is given in English units followed by a parenthetical containing SI or other units, the parenthetical's units are a conversion and should not imply a degree of precision not found in the English units.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. A method for manufacturing a blade, the blade comprising:
an airfoil (100) having:
a root end and a tip (106);
a metallic substrate (102) along at least a portion of the airfoil; and
a tip coating (152) comprising an oxide abrasive (156) and an aluminum-based matrix (154),
**characterised in that** the method comprises:
simultaneous thermal spraying of the matrix and the abrasive, and wherein the simultaneous thermal spraying comprises simultaneous plasma spraying, which comprises melting a wire, said wire being an oxide cored aluminum-based wire.

2. The method of claim 1 wherein:
the oxide comprises at least 50 weight percent of alumina or zirconia or a combination thereof.

3. The method of claim 1 or claim 2 wherein:
the aluminum-based matrix comprises, by weight, 1.0-7.5 percent Zn.

4. The method of any preceding claim wherein:
the tip coating has a content of the oxide of at least twenty volume percent, preferably wherein the tip coating has a content of the oxide of twenty volume percent to fifty volume percent.

5. The method of any preceding claim wherein:
the matrix is at least 75 weight percent aluminum; and
the oxide fills the matrix to at least 20 volume percent.

6. The method of any preceding claim wherein:
the tip coating has a thickness of 0.1 mm to 0.3 mm.

7. The method of any preceding claim wherein:
the abrasive has a characteristic size of 3 micrometers to 25 micrometers.

8. The method of any preceding claim wherein the simultaneous plasma spraying comprises a twin wire arc spraying.

9. The method of any preceding claim wherein the tip is shadow masked during the spraying.

10. The method of any preceding claim wherein the method further comprises applying a polymeric coating to a pressure side and a suction side of the airfoil.

11. The method of claim 1 wherein the aluminum-based matrix is at least 275 millivolts more active than the metallic substrate.

## Patentansprüche

1. Verfahren zur Herstellung einer Schaufel, wobei die Schaufel Folgendes umfasst:
ein Strömungsprofil (100), das Folgendes aufweist:
ein Fußende und eine Spitze (106);
ein metallisches Substrat (102) entlang mindestens eines Abschnitts des Strömungsprofils; und
eine Spitzenbeschichtung (152), die ein Oxid-Schleifmittel (156) und eine auf Aluminium basierende Matrix (154) aufweist,
**dadurch gekennzeichnet, dass** das Verfahren Folgendes umfasst:
simultanes thermisches Spritzen der Matrix und des Schleifmittels, und wobei das simultane thermische Spritzen ein simultanes Plasmaspritzen umfasst, das ein Schmelzen eines Drahts umfasst, wobei der Draht ein auf Aluminium basierender Draht mit Oxidkern ist.

2. Verfahren nach Anspruch 1, wobei:
das Oxid mindestens 50 Gew.-% Aluminiumoxid oder Zirconiumoxid oder eine Kombination davon umfasst.

3. Verfahren nach Anspruch 1 oder Anspruch 2, wobei:
die auf Aluminium basierende Matrix 1,0-7,5 Gew.-% Zn umfasst.

4. Verfahren nach einem der vorhergehenden Ansprüche, wobei:
die Spitzenbeschichtung einen Oxidgehalt von mindestens 20 Vol.-% aufweist, vorzugsweise wobei die Spitzenbeschichtung einen Oxidgehalt von 20 Vol.-% bis 50 Vol.-% aufweist.

5. Verfahren nach einem der vorhergehenden Ansprüche, wobei:
die Matrix aus mindestens 75 Gew.-% Aluminium besteht; und das Oxid die Matrix zu mindestens 20 Vol.-% füllt.

6. Verfahren nach einem der vorhergehenden Ansprüche, wobei:
die Spitzenbeschichtung eine Dicke von 0,1 mm bis 0,3 mm aufweist.

7. Verfahren nach einem der vorhergehenden Ansprüche, wobei:
das Schleifmittel eine charakteristische Größe von 3 µm bis 25 µm aufweist.

8. Verfahren nach einem der vorhergehenden Ansprüche, wobei das simultane Plasmaspritzen ein Lichtbogendrahtspritzen umfasst.

9. Verfahren nach einem der vorhergehenden Ansprüche, wobei die Spitze während dem Spritzen mit einer Lochmaske bedeckt ist.

10. Verfahren nach einem der vorhergehenden Ansprüche, wobei das Verfahren ferner ein Auftragen einer Polymerbeschichtung an einer Druckseite und einer Saugseite des Strömungsprofils umfasst.

11. Verfahren nach Anspruch 1, wobei die auf Aluminium basierende Matrix mindestens 275 mV aktiver ist als das metallische Substrat.

## Revendications

1. Procédé de fabrication d'une pale, la pale comprenant :
un profil aérodynamique (100) ayant :
une extrémité d'emplanture et une pointe (106) ;
un substrat métallique (102) le long d'au moins une partie du profil aérodynamique ; et
un revêtement de pointe (152) comprenant un abrasif d'oxyde (156) et une matrice à base d'aluminium (154),
**caractérisé en ce que** le procédé comprend :
la pulvérisation thermique simultanée de la matrice et de l'abrasif, et dans lequel la pulvérisation thermique simultanée comprend la pulvérisation au plasma simultanée, qui comprend la fusion d'un fil, ledit fil étant un fil à base d'aluminium à âme d'oxyde.

2. Procédé selon la revendication 1, dans lequel :
l'oxyde comprend au moins 50 pour cent en poids d'alumine ou de zircone ou d'une combinaison de ceux-ci.

3. Procédé selon la revendication 1 ou la revendication 2, dans lequel :
la matrice à base d'aluminium comprend, en poids, 1,0 à 7,5 pour cent de Zn.

4. Procédé selon une quelconque revendication précédente, dans lequel :
le revêtement de pointe a une teneur en oxyde d'au moins vingt pour cent en volume, de préférence dans lequel le revêtement de pointe a une teneur en oxyde allant de vingt pour cent en volume à cinquante pour cent en volume.

5. Procédé selon une quelconque revendication précédente, dans lequel :
la matrice est constituée d'au moins 75 pour cent en poids d'aluminium ; et
l'oxyde remplit la matrice à au moins 20 pour cent en volume.

6. Procédé selon une quelconque revendication précédente, dans lequel :
le revêtement de pointe a une épaisseur allant de 0,1 mm à 0,3 mm.

7. Procédé selon une quelconque revendication précédente, dans lequel :
l'abrasif a une taille caractéristique allant de 3 micromètres à 25 micromètres.

8. Procédé selon une quelconque revendication précédente, dans lequel la pulvérisation au plasma simultanée comprend une pulvérisation à l'arc à deux fils.

9. Procédé selon une quelconque revendication précédente, dans lequel la pointe est masquée par l'ombre pendant la pulvérisation.

10. Procédé selon une quelconque revendication précédente, dans lequel le procédé comprend en outre l'application d'un revêtement polymère sur un intrados et un extrados du profil aérodynamique.

11. Procédé selon la revendication 1, dans lequel la matrice à base d'aluminium est au moins 275 millivolts plus active que le substrat métallique.
